# EUROPÄISCHE PATENTSCHRIFT

(11) **EP 2 010 431 B1**
(45) Veröffentlichungstag und Bekanntmachung des Hinweises auf die Patenterteilung: **04.08.2010**
(21) Anmeldenummer: 07722153.9
(22) Anmeldetag: 02.04.2007
(51) Int. Cl.: B64D 23/00

(54) **SIMULATOR FÜR GLEITSEGEL ODER FLÄCHENFALLSCHIRME**
SIMULATOR FOR HANGGLIDERS OR PARACHUTES
SIMULATEUR DE PLANEUR OU DE PARAPENTE

(30) Priorität: 03.04.2006 DE 102006015344
(43) Veröffentlichungstag der Anmeldung: 07.01.2009
(73) Patentinhaber: Rüger, Ulrich, 82008 Unterhaching (DE)
(72) Erfinder: Rüger, Ulrich, 82008 Unterhaching (DE)
(86) Internationale Anmeldenummer: PCT/DE2007/000595
(87) Internationale Veröffentlichungsnummer: WO 2007/112733

(56) Entgegenhaltungen:
- WO-A-02/076829
- JP-A- 8 244 690
- JP-A- 8 244 691
- US-A- 4 355 982
- US-A- 6 000 942

## Beschreibung

Die Erfindung betrifft einen Simulator für Gleitsegel oder Flächenfalischirme nach dem Oberbegriff des Anspruchs 1.

Der Simulator dient zur Simulation der Interaktion zwischen dem Piloten und einer Bremsleine des Gleitsegels. Er dient vorzugsweise zum physischen Trainieren und Testen des Vermögens des Piloten "aktiv zu Fliegen", um seitliche Einklapper der Gleitsegelkappe zu vermeiden oder zumindest das mögliche Ausmaß solcher Einklapper zu vermindern.

Der Simulator ist auch zur Simulation des Fallschirmspringens (Phase mit geöffnetem Fallschirm) mit lenkbarem Flächenfallschirm, die im militärischen Zusammenhang auch Gleitfallschirm bezeichnet werden, verwendbar, allerdings zeigen die Unfallstatistiken, dass auf Basis des heutigen Standes der Technik der lenkbaren Flächenfällschirme die Gefährdung durch einen seitlichen Einklapper der Fallschirmkappe eine deutlich untergeordnete, praktisch vernachlässigbare Rolle spielt.

Unter "aktiv zu Fliegen", um seitliche Einklapper zu vermeiden, wird in dieser Anmeldung folgendes verstanden: Beim Fliegen in turbulenten Verhältnissen arbeitet der Pilot mit Hilfe der Zugkraft in den Bremsleinen, um den Auswirkungen der auf die Gleitsegelkappe auftreffenden Turbulenzen entgegenzuwirken. Er reagiert mit Nachlassen der Bremsleinen auf eine Erhöhung des Anstellwinkels der Gleitsegelkappe und der daraus resultierenden Erhöhung der Zugkraft oder mit Nachziehen (Nachbremsen) der Bremsleinen auf eine Verringerung des Anstellwinkels der Gleitsegelkappe und der daraus resultierenden Verringerung der Zugkraft bis die gewünschte Zugkraft in den Bremsleinen wieder anliegt. Insbesondere bei einer deutlichen Verringerung des Anstellwinkels, der in den negativen Bereich geht und im Zusammenspiel mit der nicht selbsttragenden Struktur des Gleitsegels zu einem seitlichen Einklapper führen kann, vermindert er durch ein schnelles Nachbremsen das mögliche Ausmaß eines solchen seitlichen Einklappers oder vermeidet ihn sogar ganz.

Größere seitliche Einklapper stellen einen gefährlichen Extremflugzustand dar und machen beim Gleitsegelfliegen einen erheblichen Anteil der registrierten Flugunfälle aus. Aber auch wenn sie nicht direkt zu einem Flugunfall führen, sind solche Einklapper unangenehm für den Piloten und gelten allgemein vor dem Hintergrund der nicht selbsttragenden Gleitsegelstruktur als ein Symbol für die Gefährlichkeit des Gleitsegelfliegens.

Der erfindungsgemäße Simulator kann bei Flugschulen im Rahmen der Flugausbildung, insbesondere auch im Rahmen des Grund- oder Höhenflugkurses (Kurse zur Erlangung des deutschen Luftfahrerscheins für Gleitsegeln beschränkt auf Flüge in der Umgebung der Startstelle) eingesetzt werden.

Als Grundlage für das Verständnis der Erfindung und des Unterschieds zum Stand der Technik dient folgende Modellbildung: Technisch und etwas vereinfacht betrachtet kann man das System aus erstens Gleitsegel, zweitens Steuerung des Gleitsegels mittels der Beaufschlagung der Bremsleinen durch den Piloten als Zusammenspiel von Zugkraft und Zugweg sowie drittens Pilot als geschlossenen Regelungskreis ansehen.

Der Pilot als Führungsglied und Regelungseinrichtung gibt aufgrund seines Steuerwunsches den Sollwert für die Zugkraft seiner Beaufschlagung als Führungsgröße vor, stellt im Falle einer Abweichung zwischen dem Sollwert und dem tatsächlichem Istwert der Zugkraft der Beaufschlagung diese fest und gleicht sie als Reaktion durch eine Veränderung des Zugweges als Stellgröße aus. Die Strecke, die das Zusammenspiel zwischen Zugkraft und Zugweg bestimmt und auf die die Störungen einwirken, ist die Gleitsegelkappe in ihrer jeweiligen Anströmungssituation. Eine einseitig auf die Gleitsegelkappe auftreffende Turbulenz bewirkt, dass sich das gleitsegelkappenseitige aufgefächerte Ende der Bremsleine dieser Seite in Richtung des Piloten oder weg von ihm bewegt. Der Pilot nimmt diese Turbulenz dann durch eine Veränderung der Zugkraft in der Bremsleine wahr. Ein seitlicher Einklapper führt beispielsweise dazu, dass sich das gleitsegelkappenseitige aufgefächerte Ende der Bremsleine dieser Seite in Richtung des Piloten bewegt und er dies durch eine Verringerung der Zugkraft in der Bremsleine wahrnimmt. Der erfindungsgemäße Simulator dient vorzugsweise zum Training der physischen und in der Regel intuitiven Regelungsparameter des Piloten, was die schnelle und angemessene Reaktion betrifft, sowie zur Erfassung von Testdaten für ihre Analyse und Bewertung.

Im Folgenden werden unter normalen Flugzuständen der stationäre Gleitflug und der stationäre Kurvenflug sowie vom Piloten kontrollierte Übergänge zwischen den beiden verstanden. Unter Störung eines normalen Flugzustandes wird verstanden, wenn ein von außen kommender Einfluss, insbesondere eine Turbulenz der Luft, einen normalen Flugzustand stört, so dass der Gleitschirm in einen Extremflugzustand, z.B. seitlicher Einklapper, Sackflug, Fullstall oder Trudeln, geraten kann bzw. gerät.

Ein Simulator der gattungsgemäßen Art ist bekannt durch die Druckschriften JP08-244691 A (1) und JP08-244690 A (2). Dabei ist bzgl. Druckschrift (2) zu bemerken, dass ein aktives Beaufschlagen der Bremsleinen mittels eines in der Spannwinde TD integrierten Aktuators nicht direkt aus ihr hervorgeht sondern nur indirekt durch die teilweise gleiche und teilweise weitergehende Beschreibung in der Druckschrift (1) (insb. Absätze [0040] und [0042]) unterstellt werden kann. Die beiden Druckschriften (2) und (1) befassen sich nämlich mit verschiedenen Aspekten bzw. Varianten des gleichen Fallschirmsprungsimulators, der zum Training von normalen Fallschirmflugphasen sowie fallschirmtypischen Fehlfunktionen dient.

In der Druckschrift (1) und in sehr vagem Ausmaß auch in der Druckschrift (2) wird ein von der Einwirkung des Piloten auf die Bremsleinen unabhängiges Ein- und Ausfahren der Bremsleinen beschrieben, siehe in Druckschrift (1) insbesondere Absätze [0028], [0040] und [0042] sowie [Anspruch 1], [0044] und [Tabelle 1] und in Druckschrift (2) insbesondere Absätze [0025] und [0070]. Allerdings bezieht sich dieses Ein- und Ausfahren nicht wie bei dem erfindungsgemäßen Simulator auf die Simulation der Interaktion zwischen Pilot und Bremsleine und die in dieser Interaktion für den Piloten erkennbare Störung des normalen Flugzustandes, wie sie beispielsweise für einen seitlichen Einklapper charakteristisch ist, sondern nur auf das Bereitstellen bzw. Verwahren der Bremsleinen samt der Handgriffe beim Spezialfall des Wechsels der Simulationsmodelle. Hierbei werden die Bremsleinen samt den Handgriffen entweder hochgezogen, wenn sie nicht im nächsten Simulationsmodell benötigt werden, oder die Handgriffe zu dem Händen des Übenden heruntergelassen, wenn sie im nächsten Simulationsmodell benötigt werden. Dies ist jedoch nicht wesentlich für die eigentliche Simulation der Interaktion zwischen Pilot und Bremsleine und für die in dieser Interaktion für den Piloten erkennbare Störung des normalen Flugzustandes, sondern ist eine Hiifsfunktion, damit mit einem Simulator verschiedene Konfigurationen von Fallschirmen bzw. verschiedene Konfigurationen bei den unterschiedlichen Phasen eines Fallschirmsprungs nachempfunden werden können.

Die Simulation der fallschirmtypischen Fehlfunktionen in Druckschrift (2), die sich nur auf den Übergang vom freien Fall zur Phase mit geöffnetem Fallschirm beziehen, wird dem Piloten generell anhand eines Displays sowie durch Einwirkungen des Simulators auf die Tragegurte bzw. auf die als "hanging means" bezeichnete Hängevorrichtung für den Übenden signalisiert, siehe insb. Absätze [Claim 1], [0010], [0020] bis [0024] sowie [0063] bis [0070] - nicht jedoch durch eine Beaufschlagung der Bremsleinen und insb. nicht durch ein von der Einwirkung des Piloten unabhängiges Ein- und Ausfahren der Bremsleine durch den Aktuator während der Interaktion zwischen Pilot und Bremsleine. Dies zeigt auch das Ausführungsbeispiel in den Absätzen [0063] bis [0070], bei dem die Bremsleinen erst ganz am Ende der Fehlfunktions-Übung praktisch beim Übergang zum normalen Flug ins Spiel kommen. Zudem sei, wie eingangs schon angemerkt, darauf verwiesen, dass für Flächenfallschirme (Typ B der Druckschrift (2) gem. der Beschreibung im Abschnitt [0038] und gem. Abbildung 5) das seitliche Einklappen als Extremflugzustand eine praktisch vernachlässigbare Rolle spielt.

Weiterhin wird in beiden Druckschriften (1) und (2) für die Simulation der Interaktion zwischen Pilot und Bremsleine sogar explizit eine von der Einwirkung des Piloten abhängige und durch den Piloten verursachte Bewegung der Bremsleinen beschrieben. In beiden Druckschriften wird nämlich angeführt, dass die Bremsleinen frei auf und ab bewegt werden können ([0025] in (2) und [0028] in (1)). In der Druckschrift (1), die die Fehlfunktionen nicht zum Gegenstand hat, wird sogar im selben Absatz noch ergänzt, dass der Aktuator so konzipiert ist, dass er eine der Realität entsprechende Spann-bzw. Gegenkraft erzeugt. Dies bedeutet völlig offensichtlich, dass während der Simulation der Interaktion zwischen Pilot und Bremsleine die Bewegung der Bremsleine durch den Piloten erfolgt. Der Aktuator dient nur der wirklichkeitsnahen Simulation des haptischen Force-Feedback, was weiter unten auch nochmals ausführlich unter der Bezeichnung pilotenabhängige Zugkraft-Betriebsweise beschrieben ist. In der Druckschrift (2) wird, was die Art und Weise der Simulation der Interaktion zwischen Pilot und Bremsleine betrifft, nichts Wesentliches offenbart, das über das aus Druckschrift (1) bekannte hinaus geht oder davon abweicht.

Somit wird in den Druckschriften (1) und (2) ein während der Simulation der Interaktion zwischen Pilot und Bremsleine zeitweise oder ständig von der Einwirkung des Piloten unabhängiges Ein- und Ausfahren der Bremsleine durch den Aktuator, wie es beispielsweise für eine charakteristische Simulation von seitlichen Einklappern erforderlich ist, nicht beschrieben und auch nicht durch sie nahe gelegt - auch nicht durch ein Kombination der Druckschriften (1) und (2). Darüber hinaus wäre die Ermittlung von Testmessdaten bei einer Simulation von seitlichen Einklappern mit dem Simulator gemäß der Druckschrift (2) nicht möglich, da weitere Messaufnehmer und eine Messdatenerfassung für die Erfassung der Piloteneinwirkungen in Form der Zugkraft in den Steuerleinen dort nicht vorgesehen sind.

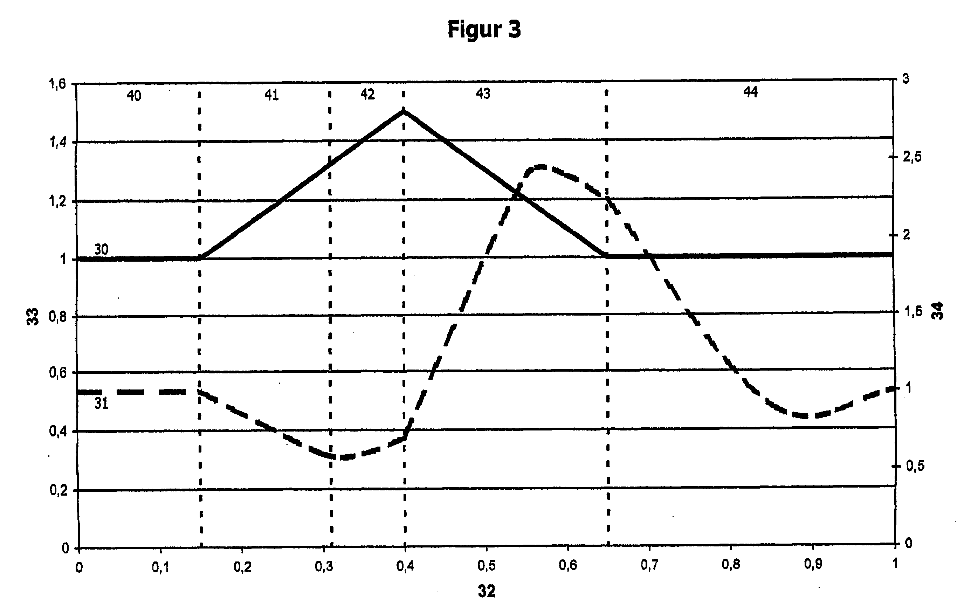

Im weiteren Text dieser Anmeldung sowie in den Ansprüchen wird Pilot synonym für Gleitsegelpilot, Gleitschirmpilot, Paraglider oder Fallschirmspringer, Gleitsegel synonym für Gleitschirm oder Paraglider sowie Gleitsegelfliegen synonym für Gleitschirmfliegen oder Paragliden verwendet. Auch wird im ganzen Text dieser Anmeldung Bremsleine synonym für Steuerleine verwendet. Weiterhin bezieht sich Regeln und Steuern im weiteren Text dieser Anmeldung auf die Arbeitsweise des Simulators, nur die verwendete Formulierung "physischen und in der Regel intuitiven Regelparameter" sowie teilweise die Beschreibung in Figur 3 beziehen sich auf die oben genannte Modellbildung.

Zudem werden folgende Begriffsinterpretationen dieser Anmeldung zugrunde gelegt:

Beaufschlagen: Das Beaufschlagen wird als i.d.R. kombinierte Kraft- und Bewegungseinwirkung angesehen, wobei eine der beiden Einwirkungen in der Kombination auch extrem klein sein kann. Wenn bei der Verwendung des Wortes Beaufschlagung einer der beiden Einwirkungsweisen im Vordergrund stehen soll, ergibt sich dies aus dem Kontext oder wird durch einen entsprechenden Zusatz klargestellt. Das Ein- und Ausfahren ist ein Beaufschlagen bei dem die Bewegungseinwirkung im Vordergrund steht.

Ein- und Ausfahren: Bei Ein- und Ausfahren ist auch das Halten als Ein- bzw. Ausfahren mit der Geschwindigkeit 0 Weg/Zeit mit impliziert. Ansonsten stellt das Ein- und Ausfahren eine über minimale Wechselbewegungen (Vibrieren) hinausgehende Bewegung dar.

Aufgabe der vorliegenden Erfindung ist es, einen Simulator der eingangs genannten Art zur Simulation der Interaktion zwischen Pilot und Bremsleine eines Gleitsegels oder Flächenfallschirms zu entwickeln, der auf Basis der eingangs angeführten Modellbildung sowohl die Simulation von normalen Flugzuständen wie auch von Störungen der normalen Flugzustände, insbesondere solche die zu seitlichen Einklappern der Gleitsegelkappe führen können, ermöglicht.

Er dient dabei zum physischen Trainieren des Vermögens des Piloten "aktiv zu Fliegen" bzw. der physischen und in der Regel intuitiven Regelungsparameter, um seitliche Einklapper der Gleitsegelkappe zu vermeiden oder zumindest das mögliche Ausmaß solcher Einklapper zu vermindern, und darüber hinaus auch zur Ermittlung von Testmessdaten zur Analyse und Bewertung dieses Vermögens, um den Stand des Vermögens und bei wiederholtem Test Veränderungen des Vermögens ermitteln zu können.

Diese Aufgabenstellung ist bezogen auf die bekannten Gieitsegel- bzw. Ftächenfallschirm-Simulatoren völlig neu und wird in keiner der genannten Druckschriften unmittelbar in Betracht gezogen oder gar gelöst.

Die Aufgabe wird in Verbindung mit dem Oberbegriff des Anspruchs 1 erfindungsgemäß durch die kennzeichnenden Merkmale des Anspruchs 1 gelöst.

Der Simulator besteht aus einem Seil und einem Griff, die als physische Schnittstelle des Simulators zum Piloten eine Bremsleine eines Gleitsegels bzw. Rächenfallschirms nachbilden. Der Griff kann hierbei durch eine Schlaufe realisiert, einen typischen Griff nachbilden oder auch ein Originalteil sein. Die Verwendung nur eines Seils inkl. Griff und somit die Nachbildung nur einer Bremsleine stellt einen sehr einfachen aber universellen Simulator dar. Weiterhin besteht er aus einem Aktuator zur Beaufschlagung des Seils und damit zur Simulation der Einflüsse des Gleitsegels bzw. Flächenfallschirms auf die Bremsleine. Der Aktuator setzt Steuerinformationen in reale Bewegungs- und/oder Krafteinwirkung um. Hierbei wird die Leistungselektronik bei einem elektrischen Aktuator oder die hydraulische bzw. pneumatische Energieversorgung bei einem hydraulischen bzw. pneumatischen Aktuator als Bestandteil des Aktuators angesehen und nicht extra erwähnt. Der Verlauf des Seils zwischen dem Griff und dem Aktuator kann gerade sein oder auch mittels Umlenkrollen und/oder anderen Vorrichtungen Richtungsänderungen aufweisen.

Schließlich besteht der Simulator noch aus einer Steuereinheit, die aus Vorgaben Steuerinformationen für den Aktuator generiert und sie an den Aktuator ausgibt. Die Steuereinheit übernimmt dazu Aufgaben eines Führungsgliedes, insbesondere die Sollwertvorgabe, und stellt auch die Schnittstelle des Simulators zum Bediener dar. Der Aktuator und die Steuereinheit sind in der Regel getrennte Teilkomponenten, sie können jedoch auch zu einer Teilkomponente zusammengefasst sein. Die Vorgaben können zuvor definiert sein, z.B. aufgrund der räumlichen Gestaltung des Simulators oder in Form eines oder mehrerer Datensätze. Beispielweise können die Vorgaben bedeuten: lasse das Seil von x Millimeter bis y Millimeter in z Sekunden nach, ziehe das Seil von x Millimeter bis y Millimeter in z Sekunden ein, halte die Beaufschlagung des Seils für z Sekunden bei konstant x Millimeter, lasse das Seil mit der Geschwindigkeit x für y Sekunden nach, ziehe das Seil mit der Geschwindigkeit x für y Sekunden ein, lasse das Seil einen Weg x mit der Geschwindigkeit y nach oder ziehe das Seil einen Weg x mit der Geschwindigkeit y ein. Sie können aber auch aus der Interaktion zwischen Pilot und Bremsleine oder sonstigen Eingaben resultieren. Die Vorgaben können diskrete Werte, wie z.B. bei den Datensätzen, oder auch ein kontinuierliches Signal sein.

Der Simulator ist **dadurch gekennzeichnet, dass** die Steuereinheit und der Aktuator derart ausgebildet sind, dass das Ein- und Ausfahren des Seils durch den Aktuator während der Simulation der Interaktion zwischen Pilot und Bremsleine zeitweise oder ständig unabhängig von der Einwirkung des Piloten erfolgt. Die Bewegung des Seils wird durch den Aktuator vorgegeben, z.B. analog zu dem nachempfunden Fall des seitlichen Einklappers, bei dem das Gleitsegel die Bewegung der Bremsleine vorgibt. Die Zugkraft im Seil und somit auch die entsprechende Krafteinwirkung des Aktuators auf das Seil ergeben sich aus der Reaktion des Piloten.

Das nur zeitweise von der Einwirkung des Piloten unabhängige Ein- und Ausfahren des Seils, wobei zeitweise auch selten sein kann, lässt die Möglichkeit, dass der prinzipielle Betriebsmodus mit dem von der Einwirkung des Piloten unabhängigen Ein- und Ausfahren des Seils (im Folgenden als pilotenunabhängiger Ein- und Ausfahr-Betriebsmodus bezeichnet), der insbesondere die Simulation eines seitlichen Einklappers ermöglicht, nicht ständig aktiv sein muss. Denn beispielsweise zur Simulation von längeren Flugphasen bei denen zwischen normalen Flugzuständen von Zeit zu Zeit Störungen der normalen Flugzustände eingebettet sind, oder evtl. auch zur Simulation von anderen Störungen der normalen Flugzustände als solche, die zu einem seitlichen Einklapper führen können, kann es sinnvoll sein den Simulator in einem anderen prinzipiellen Betriebsmodus zu betreiben.

Beispielsweise kann ein solcher anderer prinzipieller Betriebsmodus eine Beaufschlagung vorsehen, die von der Einwirkung des Piloten auf das Seil abhängig ist und dabei in Abhängigkeit vom Zugweg des Piloten eine Zugkraft im Seil erzeugt. Dies wäre eine Beaufschlagung bei der die Krafteinwirkung im Vordergrund steht. Die Steuereinheit und der Aktuator können dabei derart gestaltet sein, dass diese Beaufschlagung gesteuert oder geregelt erfolgt. Der entsprechende prinzipielle Betriebsmodus wird im Folgenden als pilotenabhängiger Zugkraft-Betriebsmodus bezeichnet. Er wird vorzugsweise zur Simulation der normalen Flugzustände verwendet, bei denen Zugkraft und -weg der Bremsleine in einem Zusammenhang, der einer nichtlinearen Feder ähnlich ist, stehen. Hierbei können im Rahmen der Generierung der Steuerinformationen aus den Vorgaben Zusammenhänge, wie sie näherungsweise für viele Gleitsegel, möglicherweise unterteilt nach DHV-Klassen (Deutscher Hängegleiterverband e.V. im DAeC), typisch oder wie sie für spezielle Gleitsegel-Muster typisch sind, implementiert werden. Vorzugsweise wird dieser pilotenabhängige Zugkraft-Betriebsmodus nicht ständig aktiv sein, sondern sich mit Betriebsmodi, mit denen Störungen der normalen Flugzustände simuliert werden, abwechseln.

Die Beaufschlagung des Seils kann jedoch für einen einfacheren Simulator, der nicht in anderen prinzipiellen Betriebsmodi betrieben werden soll, auch ständig als von der Einwirkung des Piloten unabhängiges Ein- und Ausfahren erfolgen. Damit kann der Pilot beispielsweise das Einstellen der für das aktive Fliegen richtigen Zugkraft beim Geradeausfliegen üben. Zudem kann er damit auch die Reaktion auf seitliche Einklapper üben.

Zweckmäßige Ausgestaltungen des erfindungsgemäßen Simulators sind Gegenstand der Unteransprüche.

Bei einer weiteren bevorzugten Ausgestaltung des Simulators sind die Steuereinheit und der Aktuator derart ausgebildet, dass das von der Einwirkung des Piloten unabhängige Ein- und Ausfahren des Seils durch den Aktuator weg- oder geschwindigkeitsgesteuert erfolgt. Die Güte der Beaufschlagung hängt bei einem weg- oder geschwindigkeitsgesteuertem Ein- und Ausfahren allerdings sehr von der Charakteristik des Aktuators ab. Ein weg- oder geschwindigkeitsgesteuertes Ein- und Ausfahren kann beispielsweise mit einem Schrittmotor realisiert werden.

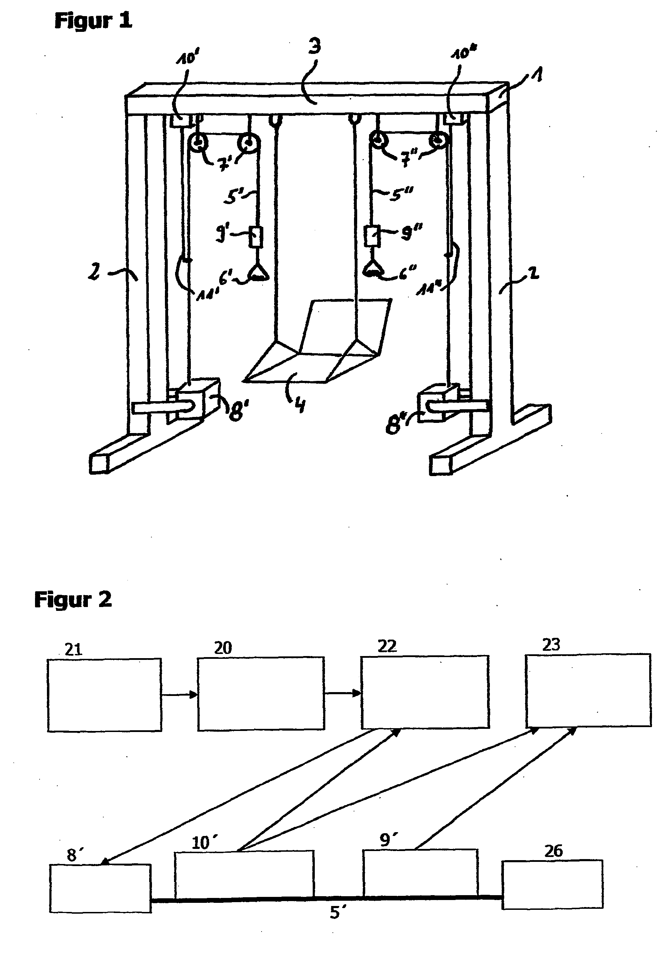

Bei einer weiteren bevorzugten Ausgestaltung des Simulators sind die Steuereinheit und der Aktuator derart ausgebildet, dass das von der Einwirkung des Piloten unabhängige Ein- und Ausfahren des Seils durch den Aktuator weg- oder geschwindigkeitsgeregelt erfolgt, wobei eine erste den tatsächlichen Beaufschlagungsweg oder die tatsächliche Beaufschlagungsgeschwindigkeit des Aktuators erfassende Messvorrichtung und ein Regler verwendet werden. Die Güte der Beaufschlagung ist bei einem weg- oder geschwindigkeitsgeregelten Ein- und Ausfahren in der Regel besser, das heißt näher an den oben genannten Vorgaben, als bei einem gesteuerten Ein- und Ausfahren. Die erste Messvorrichtung kann dabei eine separate Teilkomponente oder in den Aktuator integriert sein. Eine solche mögliche erste Messvorrichtung wird beispielsweise in Figur 1 als Beaufschlagungsweg-Seilzugsensor ausgeführt. Auch der Regler (Hard- und/oder Software) kann sowohl eine separate Teilkomponente als auch in die Steuereinheit oder in den Aktuator integriert sein.

Bei einer weiteren bevorzugten Ausgestaltung des Simulators ist eine zweite Messvorrichtung, die zur Ermittlung der Piloteneinwirkung auf das Seil dient, und eine Messdatenerfassung vorhanden, die zusammen die vom Piloten auf das Seil einwirkende Zugkraft erfassen. Die zweite Messvorrichtung ist vorzugsweise der mechanischen Krafterzeugung des Aktuators nachgeschaltet. Die Messdatenerfassung empfängt und bereitet dabei die Signale der zweiten Messvorrichtung auf. Weiterhin gibt sie sie aus und/oder archiviert sie. Die erfassten Daten der Zugkraft des Piloten auf das Seil als Reaktion auf das von seiner Einwirkung auf das Seil unabhängige Ein- und Ausfahren des Seils durch den Aktuator bei einer Störung eines normalen Flugzustandes können zur Analyse und Bewertung des Vermögens "aktiv zu Fliegen" verwendet werden. Die zweite Messvorrichtung sowie die Messdatenerfassung können dabei unabhängig oder zusammen mit weiteren Informationen die Piloteneinwirkung auf das Seil ermitteln. Die Messdatenerfassung kann auch die zweite Messvorrichtung versorgen, wie dies beispielsweise bei Sensoren, die auf Basis von Dehnmessstreifen arbeiten, in der Regel der Fall ist. Die Messdatenerfassung kann dabei sowohl eine separate Teilkomponente als auch in die zweite Messvorrichtung oder die Steueranlage integriert sein. Die Erfassung der vom Piloten auf das Seil einwirkenden Zugkraft kann mit dem Hintergrund, dass beispielsweise einer Testphase, in der die Zugkraft für die Analyse erfasst wird, eine Trainingsphase voran geht, für die keine Analyse vorgesehen und somit keine Erfassung von Daten erforderlich ist, nur zeitweise erfolgen. Sie kann jedoch auch ständig erfasst werden.

Bei einer weiteren bevorzugten Ausgestaltung des Simulators ist die zweite Messvorrichtung ein im Kraftpfad zwischen dem Piloten und dem Aktuator angeordneter Zugkraftsensor. Ein solcher Zugkraftsensor, insb. wenn er in der Nähe des Griffs in den Kraftpfad integriert ist, misst die Kraft am genauesten.

Bei einer weiteren bevorzugten Ausgestaltung des Simulators ist der Steuereinheit eine Vorgabe für die Generierung der Steuerinformationen zugeordnet, die auf einer vorbestimmten Abfolge von Sollwerteckpunkten des Beaufschlagungsweges basiert. Diese Abfolge, das heißt eine Abfolge von absoluten Werten des Beaufschlagungsweges, die einer nach dem anderen beaufschlagt werden, stellt zusammen mit der Definition für den Übergang von einem Punkt der Abfolge zum nächsten Punkt einen zeitlichen Verlauf des Beaufschlagungsweges dar. Vorzugsweise wird der Abfolge von Sollwerteckpunkten des Beaufschlagungsweges noch die Information für die zugehörigen Übergangszeiten hinzugefügt, wobei der Übergang des Beaufschlagungsweges linear mit der Zeit erfolgt. Vorbestimmt bedeutet, dass die Abfolge beispielsweise aus theoretischen Überlegungen oder Messungen der realen Verhältnisse im Fluge abgeleitet, daraus ein Satz von Sollwerteckpunkten, der eine Abfolge darstellt, generiert und dieser für die Steuereinheit zugreifbar abgelegt wurde. Während der Simulation greift die Steuereinheit dann auf diese Abfolge als Vorgabe zu. Vorzugsweise sind bzgl. des Schwierigkeitsgrades unterschiedliche Abfolgen abgespeichert und aus der großen Schwierigkeits-Bandbreite der möglichen Anforderungen an Piloten kann ein Abfolge für den individuellen Bereich des jeweils übenden Piloten auswählt werden.

Um die Anzahl der Daten zu reduzieren bzw. die Realitätsnähe des Ein- und Ausfahren zu verbessern, kann es sinnvoll sein, den Übergang des Beaufschlagungsweges bzgl. des Verlaufs speziell zu gestalten - über den einfachsten schon oben genannten linearen Verlauf hinaus, kann es daher von Vorteil sein einen spline-förmigen Verlauf oder einen Verlauf, der in den beiden Endpunkten die Beaufschlagungsgeschwindigkeit Null aufweist, zu verwenden. Hierfür können der Abfolge von Sollwerteckpunten noch weitere Parameter, die den Übergang charakterisieren, hinzugefügt werden. Diese Variante des pilotenunabhängigen Ein- und Ausfahr-Betriebsmoduses eignet sich besonders für die einfache Realisierung und einfache Anwendung von Trainings bzw. Tests des Vermögens "aktiv zu Fliegen". Er kann sich jedoch auch mit anderen Betriebsmodi abwechseln.

Bei einer weiteren bevorzugten Ausgestaltung des Simulators ist der Steuereinheit eine Vorgabe für die Generierung der Steuerinformationen zugeordnet, die auf wenigstens einer unmittelbaren Bedienungseingabe, die den Verlauf des Beaufschlagungsweges charakterisiert, basiert. Diese Variante des piloten unabhängigen Ein- und Ausfahr-Betriebsmoduses ermöglicht ein individuelles, unmittelbar bestimmbares bzw. anpassbares Training bzw. Testen von Störungen der normalen Flugzustände. Auch er kann sich mit anderen Betriebsmodi abwechseln.

Bei einer weiteren bevorzugten Ausgestaltung des Simulators ist ein Gerät vorhanden, dass den Beaufschlagungsweg und/oder die Beaufschlagungsgeschwindigkeit des Seils anhand der Vorgaben für die Generierung der Steuerinformationen, der Steuerinformationen selbst und/oder anhand der Daten der ersten Messvorrichtung sowie die Daten der vom Piloten auf das Seil einwirkenden Zugkraft zumindest für einen Abschnitt eines Simulationslaufs aufbereitet und visualisiert.

Das Gerät zur Aufbereitung und Visualisierung empfängt dazu die Vorgabe für die Generierung der Steuerinformation, die Steuerinformation selbst und/oder die Daten der ersten Messvorrichtung sowie die Daten der vom Piloten auf das Seil einwirkenden Zugkraft von den anderen Teilkomponenten des Simulators. Das Gerät zur Aufbereitung und Visualisierung kann dabei sowohl eine separate Teilkomponente als auch in die Steuereinheit integriert sein. Die Visualisierung kann dabei sowohl als eine Darstellung auf einem Bildschirm als auch als ein Papierausdruck erfolgen. Anhand der visualisierten Information kann dann beispielsweise die Analyse und Bewertung der Fähigkeiten des Piloten "aktiv zu Fliegen" erfolgen. Darüber hinaus können die Daten zur externen Aufbereitung oder Visualisierung für zumindest einen Abschnitt eines Simulationslaufs als Rohdaten oder in aufbereiteter Form ausgegeben werden. Sie können dann extern z.B. durch den Piloten selbst aufbereitet, visualisiert und/oder auch archiviert werden.

Bei einer weiteren bevorzugten Ausgestaltung des Simulators sind ein zweites Seil und ein zweiter Griff, die ebenfalls eine Bremsleine nachbilden und eine zweite Schnittstelle zum Piloten darstellt, vorhanden. Ein technisch realisierter Simulator wird wahrscheinlich zwei Seile jeweils inkl. Griff zur Nachbildung der beiden üblichen Bremsleinen - je eine für die linke und die rechte Hand - aufweisen. Das zweite Seil kann in seiner technischen Ausbildung und Funktion dem ersten Seil teilweise oder ganz entsprechen, wobei ihre jeweiligen prinzipiellen Betriebsmodi oder auch ihre jeweilige Betriebsvariante eines prinzipiellen Betriebsmoduses durchaus unterschiedlich sein können, beispielsweise wird auf dem einen Seil ein normaler Flugzustand und auf dem anderen Seil gleichzeitig ein seitlicher Einklapper simuliert. Der Simulator mit zwei Seilen kann bzgl. der Anordnung der Teilkomponenten symmetrisch aufgebaut sein. Er kann bzgl. der Anordnung der Teilkomponenten jedoch auch nicht symmetrisch aufgebaut sein, beispielsweise kann es von Vorteil sein, die zwei Aktuatoren auf der gleichen Seite des Gestells anzuordnen.

Die Erfindung wird nachfolgend mit beispielhaftem Charakter anhand einer in der Zeichnung und im Blockschaltbild dargestellten möglichen Ausführung sowie anhand eines schematisch vereinfachten Ausschnitts der möglichen Datenvisualisierung näher erläutert.
**Figur 1****:** Ein Simulator in perspektivischer Darstellung
**Figur 2****:** Blockschaltbild eines Simulators mit einem Seil
**Figur 3****:** Schematisch vereinfachter Ausschnitt einer Datenvisualisierung

Der in **Figur 1** dargestellte Simulator besteht aus einem Gestell **1** mit zwei Seitenträgern **2** und einem Querträger **3.** An dem Querträger **3** ist das Gurtzeug **4** in das sich der Pilot analog zur Praxis setzt aufgehängt. Die Seile **5', 5"** sind ausgehend von den Pilotengriffen **6', 6",** die sich relativ zum Gurtzeug **4** in einer in der Praxis üblichen Positionen befinden und die zusammen mit den Seilen **5', 5"** je eine Bremsleine nachbilden, nach oben und über Umlenkrollen **7', 7"** seitlich wieder nach unten zu den elektrischen Aktuatoren **8', 8"** (inkl. Leistungselektronik), die ihrerseits an den Seitenträgern **2** fixiert sind, geführt. In den Seilen **5', 5"** ist jeweils ein Zugkraftsensor **9', 9"** integriert. Die Beaufschlagungsweg-Seilzugsensoren **10', 10",** die gleichzeitig den Abschnitt der Seile **5', 5"** zu den Aktuatoren **8', 8"** hin vorspannen, so dass die Funktion der Wegregelung auch bei pilotenseitig schlaffen Seilen **5', 5"** gewährleistet ist, sind oben am Querträger **3** befestigt, so dass die Messstrecken der Beaufschlagungsweg-Seilzugsensoren **10', 10"** parallel zu den Bewegungsrichtungen der Seile **5', 5"** verlaufen, und die Sensorseile **11', 11"** der Beaufschlagungsweg-Seilzugsensoren **10', 10"** sind an ihrem unteren Ende mit den Seilen **5', 5"** verbunden, so dass in beide Bewegungsrichtungen der Seile **5', 5"** genügend Messstrecke vorhanden ist. Die nicht abgebildete Steuereinheit des Simulators (zzgl. Regler, Messdatenerfassung, Computer, Bildschirm und Drucker) ist über nicht dargestellte Kabel mit den Aktuatoren **8', 8",** den Zugkufisensoren **9', 9"** und den Beaufschlagungsweg-Seilzugsensoren **10', 10"** verbunden.

Das in **Figur 2** dargestellte Blockschaltbild zeigt den Informationsfluss eines Simulators mit einem Seil inkl. Griff, die eine Bremsleine nachbilden, am Beispiel der Teilkomponenten der linken Seite des Simulators aus **Figur 1****.** Die Steuereinheit **20** generiert aus der Abfolge von Sollwerteckpunkten des Beaufschlagungsweges samt Übergangszeiten **21** die Steuerinformationen für den Aktuator **8'.** Sie gibt diese Steuerinformationen über den Regler **22** an den Aktuator **8'** aus. Im Regler **22** werden sie mit dem vom Beaufschlagungsweg-Seilzugsensor **10'** erfassten tatsächlichen Beaufschlagungsweg des Seils 5' verglichen und zur Minimierung von Abweichungen entsprechend modifiziert. Das Gerät zur Aufbereitung und Visualisierung **23** erhält die Information des Beaufschlagungsweg-Seilzugsensor **10'** über den Beaufschlagungsweg des Aktuators **8'** und die Information des Zugkraftsensors **9'** über die Zugkraft in dem Seil **5',** die vom Piloten **26** aufgebracht wird, bereitet sie auf und gibt sie, beispielsweise in der in **Figur 3** gezeigten Form, aus.

Der in **Figur 3** dargestellte Ausschnitt einer Datenvisualisierung für Analyse- und Bewertungszwecke zeigt einen Verlauf des Beaufschlagungsweges **30** d.h. des Verlaufs des durch die Vorgabe für die Generierung der Steuerinformation des Akuators definierten Beaufschlagungsweges eines Seils, das eine Bremsleine nachbildet, über der Zeit und den Verlauf der Zugkraft **31** d.h. den durch den Piloten erzeugten Verlauf der Zugkraft im selben Seil über der gleichen Zeit. Die Skalierungen der Achsen Zeit **32,** Beaufschlagungsweg **33** und Zugkraft **34** sind jeweils normiert, d.h. dimensionslos, dargestellt. Die positive Richtung des Beaufschlagungsweges ist Richtung Pilot und eine positive Zugkraft bedeutet Zug im Seil. Als Beispiel wurde ein vereinfachter Verlauf des Beaufschlagungsweges **30** bei einem kleineren und kurzzeitigen seitlichen Einklapper, der sich gleich wieder selbst ausklappt, gewählt. Im Bereich **40** eines normalen Flugzustandes beträgt die Zugkraft den vom Piloten aufgebrachten Wert und der Beaufschlagungsweg ist konstant Sobald die Störung des normalen Flugzustandes im Bereich **41** beginnt und das Seil nachgibt sinkt die Zugkraft im Seil, bis der Pilot im Bereich **42** nachregelt und durch eine Bewegung der Hand die Veränderung des Beaufschlagungswegs nachvollziehen kann. Mit dieser Bewegung der Hand und durch die bereits wieder umgekehrte Veränderung des Beaufschlagungsweges im Bereich **43** kommt es zu einem Überschwingen der Zugkraft bis es der Pilot im Bereich **44** schließlich wieder schafft sich auf die von ihm gewünschte Zugkraft einzupendeln. Die Analyse und Bewertung kann nun beispielsweise anhand des maximalen Abfalls der Zugkraft und des maximalen Überschwingen der Zugkraft bei bzgl. Geschwindigkeit und Amplitude unterschiedlich ausgeprägten Veränderungen des Beaufschlagungsweges erfolgen.

### Bezugszeichenliste

- **1**: Gestell
- **2**: Seitenträger
- **3**: Querträger
- **4**: Gurtzeug
- **5', 5"**: Seile
- **6', 6"**: Griffe, die zusammen mit je einem Seil **5', 5"** seine Bremsleine nachbilden
- **7', 7"**: Umlenkrollen
- **8', 8"**: Aktuatoren
- **9', 9"**: Zugkraftsensoren
- **10', 10"**: Beaufschlagungsweg-Seilzugsensoren
- **11', 11"**: Sensorseile der Beaufschlagungsweg-Seilzugsensoren
- **20**: Steuereinheit
- **21**: Abfolge von Sollwerteckpunkten des Beaufschlagungsweges samt Übergangszeiten
- **22**: Regler
- **23**: Gerät zur Aufbereitung und Visualisierung
- **26**: Pilot
- **30**: Verlauf des Beaufschlagungsweges
- **31**: Verlauf der Zugkraft
- **32**: Zeit-Achse
- **33**: Beaufschlagungsweg-Achse
- **34**: Zugkraft-Achse
- **40**: Bereich eines normalen Flugzustandes
- **41**: Bereich mit beginnender Störung des normalen Flugzustandes
- **42**: Bereich in dem der Pilot auf die Störung des normalen Flugzustandes zu reagieren beginnt
- **43**: Bereich in dem die Störung des normalen Flugzustandes schon wieder abnimmt
- **44**: Bereich in dem die Störung des normalen Flugzustandes abgeklungen ist

## Patentansprüche

1. Simulator für Gleitsegel oder Flächenfallschirme mit einem Seil **(5')** und einem Griff **(6'),** die eine Bremsleine nachbilden, und mit einem Aktuator **(8')** zur Beaufschlagung des Seils **(5')** sowie mit einer Steuereinheit **(20)** zur Generierung der Steuerinformationen für den Aktuator **(8'),**
**dadurch gekennzeichnet,**
**dass** die Steuereinheit **(20)** und der Aktuator **(8')** derart ausgebildet sind, dass das Ein- und Ausfahren des Seils **(5')** durch den Aktuator **(8')** während der Simulation der Interaktion zwischen Pilot und Bremsleine zeitweise oder ständig unabhängig von der Einwirkung des Piloten erfolgt.

2. Simulator nach Anspruch 1 **dadurch gekennzeichnet, dass** die Steuereinheit **(20)** und der Aktuator **(8')** derart ausgebildet sind, dass das von der Einwirkung des Piloten unabhängige Ein- und Ausfahren des Seils **(5')** durch den Aktuator **(8')** weg- oder geschwindigkeitsgesteuert erfolgt.

3. Simulator nach Anspruch 1 **dadurch gekennzeichnet, dass** die Steuereinheit **(20)** und der Aktuator **(8')** derart ausgebildet sind, dass das von der Einwirkung des Piloten unabhängige Ein- und Ausfahren des Seils **(5')** durch den Aktuator **(8')** unter Verwendung einer ersten, den tatsächlichen Beaufschlagungsweg oder die tatsächliche Beaufschlagungsgeschwindigkeit des Aktuators **(8')** erfassenden Messvorrichtung **(10')** und eines Reglers weg- oder geschwindigkeitsgeregelt erfolgt.

4. Simulator nach einem der Ansprüche 1 bis 3 **dadurch gekennzeichnet, dass** eine zweite Messvorrichtung **(9'),** die zur Ermittlung der Piloteneinwirkung auf das Seil **(5')** dient, und eine Messdatenerfassung vorhanden sind, die zusammen die vom Piloten auf das Seil (5') einwirkende Zugkraft erfassen.

5. Simulator nach Anspruch 4 **dadurch gekennzeichnet dass** die zweite Messvorrichtung ein im Kraftpfad zwischen dem Piloten und dem Aktuator **(8')** angeordneter Zugkraftsensor **(9')** ist.

6. Simulator nach einem der Ansprüche 1 bis 5 **dadurch gekennzeichnet, dass** der Steuereinheit **(20)** eine Vorgabe für die Generierung der Steuerinformationen zugeordnet ist, die auf einer vorbestimmten Abfolge von Sollwerteckpunkten **(21)** des Beaufschlagungsweges basiert.

7. Simulator nach einem der Ansprüche 1 bis 6 **dadurch gekennzeichnet, dass** der Steuereinheit **(20)** eine Vorgabe für die Generierung der Steuerinformationen zugeordnet ist, die auf wenigstens einer unmittelbaren Bedienungseingabe, die den Verlauf des Beaufschlagungsweges charakterisiert, basiert.

8. Simulator nach einem der Ansprüche 4 bis 7 **dadurch gekennzeichnet, dass** ein Gerät vorhanden ist, das den Beaufschlagungsweg und/oder die Beaufschlagungsgeschwindigkeit des Seils (5') anhand der Vorgaben für die Generierung der Steuerinformationen, anhand der Steuerinformation selbst und/oder anhand der Daten der ersten Messvorrichtung sowie die Daten der vom Piloten auf das Seil **(5')** einwirkenden Zugkraft zumindest für einen Abschnitt eines Simulationslaufs aufbereitet und visualisiert.

9. Simulator nach einem der Ansprüche 1 bis 8, **dadurch gekennzeichnet, dass** ein zweites Seil **(5")** und ein zweiter Griff **(6"),** die ebenfalls eine Bremsleine nachbilden und eine zweite Schnittstelle zum Piloten darstellen, vorhanden sind.

## Claims

1. Simulator for paragliders or parachutes, having a cord (5') and a handle (6'), which simulate a brake line, and having an actuator (8') for admitting the cord (5') and having a control unit (20) for generating the control information for the actuator (8'),
**characterized in that**
the control unit (20) and the actuator (8') are designed in such a manner that the retraction and extension of the cord (5') by the actuator (8') are occasionally or continuously carried out independently of the pilot's action during the simulation of the interaction between the pilot and the brake line.

2. Simulator according to Claim 1, **characterized in that** the control unit (20) and the actuator (8') are designed in such a manner that the retraction and extension of the cord (5') by the actuator (8'), which are independent of the pilot's action, are carried out in a manner controlled by the travel or speed.

3. Simulator according to Claim 1, **characterized in that** the control unit (20) and the actuator (8') are designed in such a manner that the retraction and extension of the cord (5') by the actuator (8'), which are independent of the pilot's action, are carried out in a manner controlled by the travel or speed using a first measuring apparatus (10'), which records the actual admission travel or the actual admission speed of the actuator (8'), and a controller.

4. Simulator according to one of Claims 1 to 3, **characterized in that** a second measuring apparatus (9'), which is used to determine the pilot's action on the cord (5'), and a measured data recording means are provided and together record the tensile force acting on the cord (5') from the pilot.

5. Simulator according to Claim 4, **characterized in that** the second measuring apparatus is a tensile force sensor (9') arranged in the force path between the pilot and the actuator (8').

6. Simulator according to one of Claims 1 to 5, **characterized in that** the control unit (20) is assigned a stipulation for generating the control information, which stipulation is based on a predetermined sequence of desired value vertices (21) of the admission travel.

7. Simulator according to one of Claims 1 to 6, **characterized in that** the control unit (20) is assigned a stipulation for generating the control information, which stipulation is based on at least one immediate operating input which characterizes the course of the admission travel.

8. Simulator according to one of Claims 4 to 7, **characterized in that** a device is provided, which device preprocesses and displays the admission travel and/or the admission speed of the cord (5'), at least for a section of a simulation run, using the stipulations for generating the control information, using the control information itself and/or using the data from the first measuring apparatus as well as the data relating to the tensile force acting on the cord (5') from the pilot.

9. Simulator according to one of Claims 1 to 8, **characterized in that** a second cord (5") and a second handle (6") which likewise simulate a brake line and constitute a second interface with respect to the pilot are provided.

## Revendications

1. Simulateur pour parapente ou aile comprenant une corde (5') et une poignée (6') qui simulent un frein et comprenant un actionneur (8') pour solliciter la corde (5') et comprenant aussi une unité de commande (20) pour générer les informations de commande pour l'actionneur (8'),
**caractérisé en ce**
**que** l'unité de commande (20) et l'actionneur (8') sont configurés de telle sorte que l'introduction et l'extraction de la corde (5') par l'actionneur (8') pendant la simulation de l'interaction entre le pilote et le frein s'effectuent temporairement ou constamment indépendamment de l'intervention du pilote.

2. Simulateur selon la revendication 1, **caractérisé en ce que** l'unité de commande (20) et l'actionneur (8') sont configurés de telle sorte que l'introduction et l'extraction de la corde (5') par l'actionneur (8') indépendamment de l'intervention du pilote se déroulent en étant commandées par la course ou la vitesse.

3. Simulateur selon la revendication 1, **caractérisé en ce que** l'unité de commande (20) et l'actionneur (8') sont configurés de telle sorte que l'introduction et l'extraction de la corde (5') par l'actionneur (8') indépendamment de l'intervention du pilote se déroulent avec régulation par la course ou la
vitesse en utilisant un premier dispositif de mesure (10') qui détecte la course de sollicitation réelle ou la vitesse de sollicitation réelle de l'actionneur (8') ainsi qu'un régulateur.

4. Simulateur selon l'une des revendications 1 à 3, **caractérisé en ce qu'**il existe un deuxième dispositif de mesure (9'), qui sert à déterminer l'intervention du pilote sur la corde (5'), ainsi qu'un dispositif d'acquisition des valeurs mesurées qui servent ensemble à détecter la force de traction exercée par le pilote sur la corde (5').

5. Simulateur selon la revendication 4, **caractérisé en ce que** le deuxième dispositif de mesure est un capteur de force de traction (9') disposé dans le trajet des forces entre le pilote et l'actionneur (8').

6. Simulateur selon l'une des revendications 1 à 5, **caractérisé en ce qu'**une valeur de consigne est associée à l'unité de commande (20) pour générer les informations de commande, laquelle se base sur une séquence prédéfinie des points angulaires de consigne (21) de la course de sollicitation.

7. Simulateur selon l'une des revendications 1 à 6, **caractérisé en ce qu'**une valeur de consigne est associée à l'unité de commande (20) pour générer les informations de commande, laquelle se base sur au moins une entrée de commande directe qui caractérise la progression de la course de sollicitation.

8. Simulateur selon l'une des revendications 4 à 7, **caractérisé en ce qu'**il existe un appareil qui prépare et visualise la course de sollicitation et/ou la vitesse de sollicitation de la corde (5'), au moins pour une portion du déroulement d'une simulation, au moyen de la valeur de consigne pour générer les informations de commande, au moyen de l'information de commande elle-même et/ou au moyen des données du premier dispositif de mesure ainsi que des données de la force de traction exercée par le pilote sur la corde (5').

9. Simulateur selon l'une des revendications 1 à 8, **caractérisé en ce qu'**il existe une deuxième corde (5") et une deuxième poignée (6") qui simulent également un frein et représentent une deuxième interface avec le pilote.
